# EUROPÄISCHE PATENTSCHRIFT

(11) **EP 2 639 911 B1**
(45) Veröffentlichungstag und Bekanntmachung des Hinweises auf die Patenterteilung: **24.03.2021**
(21) Anmeldenummer: 13158524.2
(22) Anmeldetag: 11.03.2013
(51) Int. Cl.: H02G 3/08, H02G 3/12, H02G 3/04

(54) **Montageelement für Geräteeinbaukanäle, Geräteeinbaukanal mit einem derartigen Montageelement sowie Verfahren zur Montage eines derartigen Montageelements in einen Geräteeinbaukanal**
Mounting element for device installation channels, device installation channel with such a mounting element and method for mounting such a mounting element in a device installation channel
Elément de montage pour canaux d'intégration d'appareils, canal d'intégration d'appareils doté d'un tel élément de montage et procédé de montage d'un tel élément de montage dans un canal d'intégration d'appareils

(30) Priorität: 12.03.2012 DE 102012102061
(43) Veröffentlichungstag der Anmeldung: 18.09.2013
(73) Patentinhaber: OBO Bettermann Produktion Deutschland GmbH & Co.KG, 58710 Menden (DE)
(72) Erfinder: Zimm, Christof, 91058 Erlangen (DE); Künzel, Werner, 95111 Rehau (DE); Friedrich, Jochen, 95119 Naila (DE); Salzhuber, Frank, 90419 Nürnberg (DE); Engelbrecht, Bernd Jürgen, 90763 Fürth (DE); Seidel, Bernd, 08209 Auerbach (DE); Christ, Michael, 95028 Hof (DE)
(74) Vertreter: Haverkamp, Jens

(56) Entgegenhaltungen:
- EP-A1- 0 570 285
- EP-A2- 2 073 334
- DE-A1- 4 432 509
- DE-A1- 19 527 133
- DE-C1- 4 331 580
- DE-C2- 3 546 615
- DE-T2- 69 013 555
- DE-U- 7 527 937
- FR-A5- 2 087 657

## Beschreibung

Die vorliegende Erfindung betrifft ein Montageelement für Geräteeinbaukanäle mit einer Halteschiene am Kanalboden, einen Geräteeinbaukanal, der ein erfindungsgemäßes Montageelement umfasst, sowie ein Verfahren zur Montage eines erfindungsgemäßen Montageelements in einem Geräteeinbaukanal.

Geräteeinbaukanäle sind im Stand der Technik bekannt, beispielsweise aus der DE 77 11 728 U.

Derartige Geräteeinbaukanäle sind üblicherweise C-förmige Profile aus extrudiertem, thermoplastischem Kunststoff (beispielsweise Polyvinylchlorid, Polypropylen), aus stranggepresstem Aluminium oder aus profiliertem Stahlblech. Üblicherweise wird die offene Seite des Geräteeinbaukanals mit einem entsprechenden Deckel reversibel verschlossen. Derartige Geräteeinbaukanäle werden üblicherweise an Decken, Wänden, unterhalb von Fensterbrüstungen, oberhalb von oder an Labortischen und ähnlichen Stellen montiert.

Um Installationsgeräte wie Steckdosen, Schalter, Empfänger von Fernsteuerungssystemen, Datendosen, Telefondosen und dergleichen in derartigen Geräteeinbaukanälen zu befestigen, werden Montageelemente, insbesondere Geräteeinbaudosen, in den Geräteeinbaukanal montiert. Derartige Montageelemente sind aus dem Stand der Technik bekannt. Beispielsweise beschreibt die EP 1 406 361 B1 ein Montageelement für Geräteeinbaukanäle mit einem Boden mit Halteschienen, wobei das Montageelement über ein Bodenteil, dessen Füße auf dem Boden des Kanals aufstehen, mittels federnder Rasthaken durch einfaches Aufdrücken des Montageelements auf die Halteschienen in den Kanal eingesetzt werden. Ein derartiges Montageelement hat jedoch den Nachteil, dass zum Ausbau des Montageelements aus dem Geräteeinbaukanal der Einsatz eines Werkzeugs erforderlich ist. Darüber hinaus beschreibt die DE 86 09 417 ein Montageelement, das zur Befestigung am Installationskanal zwei Klemmbügel mit einander entgegengesetzt gerichteten Schenkeln aufweist, die zur Festlegung am Geräteeinbaukanal über eine drehbar gelagerte Steuerscheibe mit einer Nut des Kanals verklemmt werden. Ein derartiges Steuerelement hat jedoch den Nachteil eines komplizierten Aufbaus, was mit Kostennachteilen verbunden ist. Darüber hinaus ist das Montageelement vor Betätigung der Steuerscheibe nicht mit dem Geräteinbaukanal verbunden. Nach Betätigung der Steuerscheiben hingegen ist keine Verschiebung des Montageelements in Längsrichtung des Geräteeinbaukanals mehr möglich, so dass eine Feinjustierung in der Position des Montageelements bereits vor der Betätigung der Steuerscheibe erfolgen muss.

In der Patentschrift DE 43 31 580 C1 ist eine Einbaudose für elektrische Installationsgeräte offenbart, die zum Festlegen an einer Haltevorsprünge aufweisenden Montagewand dient, wobei die Montagewand vorzugsweise Bestandteil eines Kabelkanals ist. Im Inneren des Kabelkanals ist die Einbaudose mit an den Haltevorsprüngen festlegbaren, den Dosenboden unterseitig überragenden Haltemitteln befestigbar, wobei die Haltemittel im Abstand zueinander angeordnet sind und ihr gegenseitiger Abstand veränderbar ist, wobei die Lageveränderung der Haltemittel durch Befestigungsschrauben erfolgt, wobei die die als Rasthaken ausgebildeten Haltemittel über wenigstens eine scharnierartige Verbindung einer der Wandungen der Einbaudose unmittelbar angeformt sind. Sämtliche offenbarten Haltemittel sind als flexible Rasthaken ausgebildet und werden mittels einer nicht ohne Werkzeug einzubringenden Befestigungsschraube an den Haltevorsprüngen des Kabelkanals festgelegt.

In der Patentanmeldung EP 2 073 334 A2 wird eine Halterung für elektrische Installationsgeräte in einem Kabelkanal mit einem Halteprofil beschrieben, wobei das Halteprofil mit flexiblen Rasthaken kooperiert, die durch ein als Schließscheibe ausgebildetes Fixiermittel gegen das Halteprofil gedrückt und auf diese Weise fixiert werden.

Eine weitere Einbaudose für elektrische Installationsgeräte wird in der deutschen Patentanmeldung DE 195 27 133 A1 beschrieben. Die Einbaudose weist wenigstens ein den Dosenboden unterseitig überragendes Klemmelement auf, das mit wenigstens einer Profilschiene am Boden eines Installationskanals zu verrasten ist und dabei zur Festlegung der Einbaudose an der Profilschiene dient, wobei das als Rasthaken ausgebildete Klemmelement bezüglich des Dosenbodens stationär ist und das Klemmelement sich bei der Verrastung mit der Profilschiene derart verspannt, dass es die Einbaudose an der Profilschiene festlegt oder das die Einbaudose nach der Verrastung durch wenigstens ein am Klemmelement und/oder an der Profilschiene angreifendes Festlegungselement an der Profilschiene festlegbar ist. Alle beschrieben Klemmelemente sind flexibel ausgebildet und werden durch eine nicht ohne Werkzeug einzubringende Befestigungsschraube, die auf das Festlegeelement einwirkt, an der Profilschiene des Installationskanals festgelegt.

In der europäischen Patentanmeldung EP 0 570 285 A1 wird eine weitere Einbaudose beschrieben, die ausschließlich über flexible Rasthaken an der Profilschiene eines Kabelkanals gehalten wird. Ein Arretierungselement fixiert die Rasthaken an der Profilschiene.

Im Gebrauchsmuster DE 75 27 937 U ist ebenfalls eine Einbaudose offenbart. Die Einbaudose ist für den Einbau von Geräten wie beispielsweise Steckdosen in Installationskanäle mit einer Vorrichtung am Dosenboden zur lösbaren Befestigung der Dose an der Mittelschiene des Installationskanals vorgesehen. Die Mittelschiene weist dabei ein C-Profil auf, in das die Befestigungsvorrichtung der Dose eingreift, wobei als Befestigungsvorrichtung am Dosenboden mindestens ein Paar gegenüberstehender federnder Rastnasen angeformt ist, die aus Kunststoff bestehen. Außerdem ist mindestens ein vom Innenraum der Dose her zu betätigender Keil zur Spreizung der Rastnasen im Montagezustand durch den Dosenboden geführt.

Zwei weitere Patentschriften DE 35 46 615 C2 und DE 690 13 555 T2 beziehen sich auf die Befestigung von Halterungen an Halteschienen mittels fester Rasthaken in einem Kabelkanal. Es werden in diesem Zusammenhang Montageelemente für Geräteeinbaukanäle offenbart, welche ausschließlich starre Rasthaken aufweisen.

In der französischen Patentanmeldung FR 2 087 657 A5 wird ebenfalls die Befestigung von Halterungen an Halteschienen mit Hilfe von Rasthaken in einem Kabelkanal offenbart. Im Wesentlichen besteht das offenbarte Befestigungsmittel aus einem Formkörper eines Schaltelements und einem Montagering. Neben einem starren Rasthaken wird ein flexibler Rasthaken des Formkörpers an der Innenseite der Halteschiene im arretierten Zustand durch einen Montagering nach außen gedrückt, wobei der Montagering selbst über einen eingerasteten Dorn am Formkörper arretiert ist. Eine Arretierung durch Absicherung des Formkörpers bzw. des Montagerings während der Montage gegen versehentliches Arretieren ist nicht vorgesehen.

In der deutschen Patentanmeldung DE 44 32 509 A1 wird ein Elektro-Installationsgerät offenbart, welches insbesondere für Kabelkanäle vorgesehen ist. Unter anderen ist eine Ausführungsform offenbart, die Halteteile mit jeweils einem federelastischen Haltearm mit Rastnase und einen von diesem in Querrichtung des Bodenhaltprofils beabstandeten, im Wesentlichen starren, formstabilen Halteansatz vorsieht. Zum Arretieren des Geräts sind Arretierschrauben vorgesehen.

Vor diesem Hintergrund liegt die Aufgabe der vorliegenden Erfindung in der Bereitstellung eines Montageelements für Geräteeinbaukanäle, das die Nachteile des Standes der Technik überwindet. Insbesondere soll das erfindungsgemäße Montageelement ohne zusätzliches Werkzeug in einem Geräteeinbaukanal montierbar sein. Darüber hinaus soll das erfindungsgemäße Montageelement bei der Montage bereits in einer frühen Phase des Montagevorgangs mit dem Geräteeinbaukanal derart verbunden sein, dass es nicht mehr von diesem abfällt, jedoch noch zur Feinjustierung in Längsrichtung des Geräteeinbaukanals verschoben werden kann. Letztlich soll das erfindungsgemäße Montageelement einfach und kostengünstig herstellbar sein. Darüber hinaus liegt die vorliegende Erfindung in der Bereitstellung eines Geräteeinbaukanals mit einem erfindungsgemäßen Montageelement sowie in einem Verfahren zur Montage des erfindungsgemäßen Montageelements in einem Geräteeinbaukanal.

Diese und andere Aufgaben werden durch ein Montageelement für Geräteeinbaukanäle mit einer Halteschiene am Kanalboden mit den Merkmalen des Anspruchs 1, durch einen Geräteeinbaukanal mit den Merkmalen des Anspruchs 3 und durch ein Verfahren mit den Merkmalen des Anspruchs 4 gelöst. Eine bevorzugte Ausführungsform des erfindungsgemäßen Montageelements ist im abhängigen Anspruch 2 beschrieben.

Gemäß der vorliegenden Erfindung wurde erkannt, dass ein in einem Geräteeinbaukanal eingesetztes Montageelement bereits ausreichend mit dem Geräteeinbaukanal verbunden ist, wenn das Montageelement über Rasthaken, die mit einer Halteschiene am Boden des Geräteeinbaukanals kooperieren, befestigt ist. In diesem Zustand lässt sich das Montageelement jedoch noch zur Feinjustierung bzw. Feinpositionierung in Längsrichtung des Geräteeinbaukanals verschieben. Zum Arretieren der Montageposition des Montageelements in dem Geräteeinbaukanal dient gemäß der vorliegenden Erfindung ein Arretierungselement, das zumindest einen Führungsabschnitt und einen Stützabschnitt umfasst. Der Stützabschnitt des Arretierungselements ist durch eine Öffnung im Bodenteil des Montageelements geführt und liegt im im Geräteeinbaukanal montierten Zustand des Montageelements an der der Halteschiene abgewandten Seite eines Rasthakens an. Dadurch wird ein Zurückführen dieses Rasthakens zur Demontage des Montageelements aus dem Geräteeinbaukanal verhindert und die Reibung der Rasthaken an der Halteschiene erhöht, so dass das Montageelement mit eingesetztem Arretierungselement nur noch mit sehr hohem Kraftaufwand in Längsrichtung des Geräteeinbaukanals verschoben werden kann. Zur Demontage wird das Arretierungselement aus dem Montageelement gezogen, so dass der Stützabschnitt nicht mehr an dem Rasthaken anliegt und das Montageelement aus dem Geräteeinbaukanal entnommen werden kann.

Dementsprechend liegt die vorliegende Erfindung in der Bereitstellung eines Montageelements für Geräteeinbaukanäle mit einer Halteschiene am Kanalboden, wobei das Montageelement ein Bodenteil mit daran angeformten, mit der Halteschiene kooperierenden Rasthaken und Wandungen sowie ein Arretierungselement umfasst, das zumindest aus einem Führungsabschnitt und einem Stützabschnitt aufgebaut ist, wobei der Stützabschnitt im im Geräteeinbaukanal montierten Zustand des Montageelements durch eine Öffnung des Bodenteils geführt ist und an der der Halteschiene abgewandten Seite eines Rasthakens anliegt.

Darüber hinaus liegt die vorliegende Erfindung in der Bereitstellung eines Geräteeinbaukanals mit einer Halteschiene am Kanalboden, der mindestens ein erfindungsgemäßes Montageelement für Geräteeinbaukanäle umfasst. Letztlich liegt die vorliegende Erfindung auch in einem Verfahren zur Montage eines erfindungsgemäßen Montageelements in einem Geräteeinbaukanal mit einer Halteschiene, das die Stufen des Aufrastens des Montageelements auf die Halteschiene, des Positionierens des Montageelements in Längsrichtung des Geräteeinbaukanals durch Verschieben des Montageelements entlang der Halteschiene und des Arretierens der Position des Montageelements, indem der Stützabschnitt des Arretierungselements des Montageelements durch eine Öffnung des Bodenteils geführt wird, so dass der Stützabschnitt an der der Halteschiene abgewandten Seite eines Rasthakens anliegt, umfasst.

Es kann sich als hilfreich erweisen, wenn in einer der Wandungen des Montageelementes eine Führung vorgesehen ist, in der der Führungsabschnitt des Arretierungselements im im Geräteeinbaukanal montierten Zustand des Montageelementes geführt ist. Ein derartiges Führen gewährleistet ein sicheres Einführen des Arretierungselements und einen festen Sitz des Montageelements im Geräteeinbaukanal.

Ebenso kann es von Nutzen sein, wenn mindestens einer der Rasthaken als flexibler Rasthaken ausgebildet ist. Im Zusammenhang mit Rasthaken bedeutet der Begriff "flexibel", wie er hierin verwendet wird, dass der Rasthaken soweit verformt werden kann, dass das Montageelement mit daraus entferntem Arretierungselement von der Halteschiene des Geräteeinbaukanals abgenommen werden kann. Dies sorgt einerseits dafür, dass das Montageelement leicht auf die Halteschiene des Geräteinbaukanals aufgerastet werden kann und bei entferntem Arretierungselement auch wieder von dieser abgenommen werden kann. In diesem Zusammenhang ist es besonders bevorzugt, wenn zumindest der flexible, insbesondere aber auch sämtliche Rasthaken mit einer Einführungsschräge ausgestattet sind. Eine derartige Einführungsschräge erleichtert das Aufrasten des Montageelements auf die Halteschiene des Geräteeinbaukanals weiter.

Die weiteren Rasthaken können als starre Rasthaken ausgeführt sein. Die Starrheit eines Rasthakens wird gemäß der vorliegenden Erfindung insbesondere dadurch erzielt, dass an der der Halteschiene abgewandten Seite des Rasthakens ein Stützsteg vorhanden, insbesondere einstückig daran angeformt ist. In alternativen Ausführungsformen wird die Starrheit des Rasthakens durch die Wahl seines Materials (beispielsweise aus Metall) oder durch die Dicke seines Materials erzielt.

In besonders bevorzugt Ausführungsformen sind sämtliche starre Rasthaken des erfindungsgemäßen Montagelements im in den Geräteeinbaukanal eingebauten Zustand auf derselben Seite der Halteschiene angeordnet.

Es kann von besonderem Vorteil sein, wenn der Stützabschnitt des Arretierungselements im Geräteeinbaukanal montierten Zustand des Montageelements an der der Halteschiene abgewandten Seite eines flexiblen Rasthakens anliegt. Auf diese Weise wird erreicht, dass auch bei Verwendung eines flexiblen Rasthakens ein ungewolltes Lösen des Montageelements von der Halteschiene wirksam verhindert wird.

Zur Herstellung des Montageelements und des dazugehörigen Arretierungselements hat sich Spritzgießen als bevorzugte Art der Herstellung erwiesen. Es dienen Polyvinylchlorid (PVC), Polyethylen (insbesondere HDPE), Polyamid (PA; insbesondere Polyamid-6 und Polyamid-6,6) und Polypropylen (insbesondere statistisches Polypropylen) als bevorzugte Materialien für das Montageelement und das dazugehörige Arretierungselement.

Im Folgenden soll die Erfindung unter Bezugnahme auf die in den Figuren dargestellte Ausführungsform im Detail erläutert werden. Dabei zeigen:
- **Fig. 1:**: eine perspektivische Ansicht eines erfindungsgemäßen Montageelements, die als Geräteeinbaudose mit zwei abgenommenen Eckteilen ausgebildet ist;
- **Fig. 2:**: eine Ansicht des in Fig. 1 gezeigten erfindungsgemäßen Montageelements mit eingesetzten Eckteilen von unten;
- **Fig. 3:**: eine perspektivische Ansicht eines zu der in Fig. 1 gezeigten Ausführungsform gehörigen Arretierungselements;
- **Fig. 4:**: eine Querschnittsdarstellung der in Fig. 1 gezeigten Ausführungsform des erfindungsgemäßen Montageelement in in einen Geräteeinbaukanal eingesetzten Zustand während des Einführens des Arretierungselements; und
- **Fig. 5:**: eine Querschnittsdarstellung der in Fig. 1 gezeigten Ausführungsform des erfindungsgemäßen Montageelement in in einen Geräteeinbaukanal eingesetzten Zustand mit eingesetztem Arretierungselement.

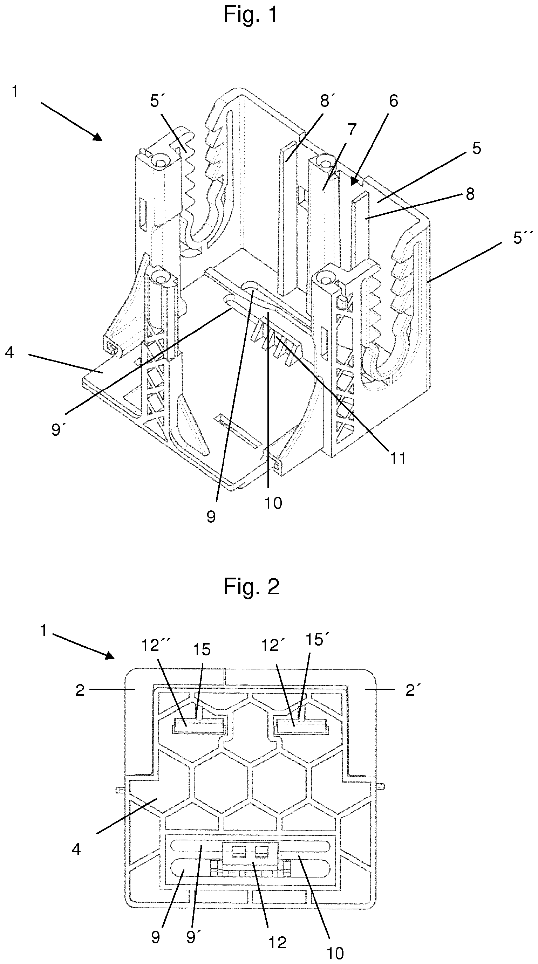

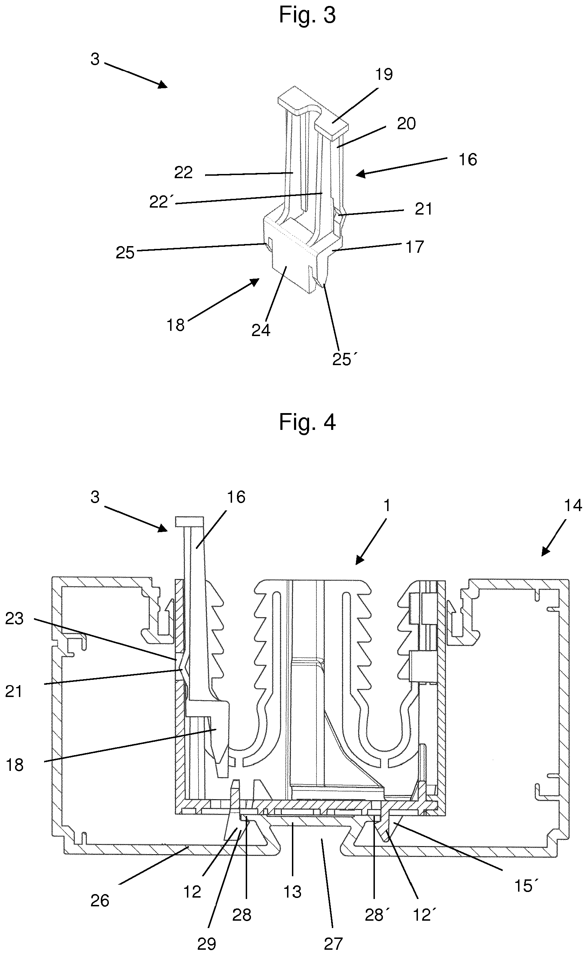

In Figur 1 ist eine Ausführungsform eines als Geräteeinbaudose ausgebildeten erfindungsgemäßen Montageelements 1 in einer perspektivischen Darstellung gezeigt, wobei zwei reversibel einsetzbare Eckstücke 2, 2' des Montageelements (in Fig. 1 vorne rechts und vorne links) sowie das Arretierungselement 3 nicht in das Montageelement 1 eingesetzt sind. Das erfindungsgemäße Montageelement 1 umfasst ein Bodenteil 4 sowie Wandungen 5, 5', 5". Dabei ist die Wandung 5 als Ganzes einstückig mit dem Bodenteil 4 verbunden, während die Wandungen 5', 5" nur etwa zur Hälfte einstückig mit dem Bodenteil 4 des Montageelements 1 verbunden sind. Der Rest der Wandungen 5', 5" sowie die der Wandung 5 gegenüberliegende Wandung werden durch Eckstücke 2,2' gebildet, die entfernbar in das Montageelement 1 eingesetzt werden können. An der Wandung 5 ist eine Führung 6 angeordnet, die aus einem zentralen Führungselement 7 und Führungswänden 8, 8' aufgebaut ist und zur Führung des Arretierungselements 3 (vgl. Fig. 3 bis 5) dient.

Das Bodenteil 4 des Montageelements 1 weist zwei vorzugsweise parallel zueinander verlaufende Öffnungen 9, 9' auf, die als Freischnitte ausgebildet sind und die voneinander durch einen Steg 10 getrennt sind. In der in Fig. 1 gezeigten Ausführungsform ist der Steg 10 überhöht ausgebildet, d.h. seine Dicke übersteigt die Stärke des Bodenteils 4. Dabei ist der Steg 10 etwa in der Mitte seiner Längserstreckung am dicksten ausgebildet. An der der Wandung 5 abgewandten Seite der Öffnung 9 ist ein Halteelement 11 angeformt.

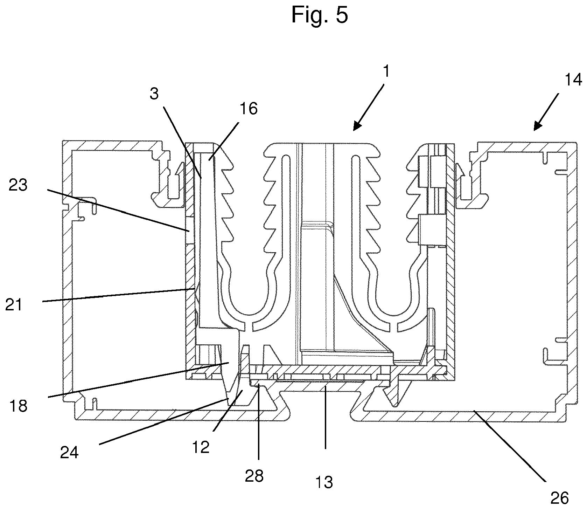

Eine Ansicht der in Fig. 1 dargestellten Ausführungsform des erfindungsgemäßen Montageelements 1 von unten ist in Fig. 2 gezeigt, wobei hier die Eckstücke 2, 2' rastend mit dem Montageelement 1 verbunden sind. An der den Wandungen 5, 5', 5" abgewandten Seite des Bodenteils 4 sind Rasthaken 12, 12', 12" vorzugsweise einstückig angeformt angeordnet. Der Rasthaken 12 ist dabei an dem zwischen den Freischnitten 9, 9' angeordneten Steg 10 angeformt und als flexibler Rasthaken 12 ausgebildet. Die Flexibilität des Rasthakens 12 ermöglicht einerseits ein vereinfachtes Aufrasten des Montageelements 1 auf eine Halteschiene 13 eines Geräteeinbaukanals 14 (vgl. Figuren 4 und 5). Die weiteren Rasthaken 12', 12" sind hingegen als starre Rasthaken ausgebildet. Die Starrheit der Rasthaken begründet sich in der in Fig. 2 dargestellten Ausführungsform des erfindungsgemäßen Montageelements 1 durch das Vorsehen von Stützstegen 15, 15', die an der dem flexiblen Rasthaken 12 abgewandten Seite der Rasthaken 12', 12" einstückig sowohl mit den Rasthaken 12, 12" als auch dem Bodenteil 4 verbunden sind.

Figur 3 zeigt eine perspektivische Ansicht des Arretierungselements 3 des in den Figuren 1 und 2 gezeigten erfindungsgemäßen Montageelements 1. Das Arretierungselement 3 umfasst einen Führungsabschnitt 16, durch den das Arretierungselement an der Führung 6 in der Wandung 5 geführt ist, einen Übergangsabschnitt 17 sowie einen Stützabschnitt 18, wobei der Übergangsabschnitt 17 den Führungsabschnitt 16 mit dem Stützabschnitt 18 verbindet. Der Führungsabschnitt 16 beinhaltet einen Deckel 19, eine Führungswand 20 mit einem Rastelement 21 sowie zwei Tragstützen 22 und 22'. Das Rastelement 21 ermöglicht ein verrastendes Festlegen des Arretierungselements 3 in der Führung 6, in dem das Rastelement 21 in ein im Bereich der Führung 6 in die Wandung 5 eingebrachtes Durchgangsloch 23 eindringt. Der Stützabschnitt 18 ist aus einer zentralen Stütze 24 und zwei seitlich vom Stützabschnitt 24 angeordnete Einführelemente 25, 25' aufgebaut.

Der Einbau des erfindungsgemäßen Montageelements 1 in einen Geräteinbaukanal 14 ist in den Figuren 4 und 5 veranschaulicht. Der Geräteeinbaukanal weist eine am Kanalboden 26 angeordnete Halteschiene 13 auf, die in der vorliegenden Ausführungsform als Hutschiene 13 ausgebildet ist.

Die Halteschiene 13 weist an der dem erfindungsgemäßen Montageelement 1 abgewandten Seite der Halteschiene 13 eine sich in Längsrichtung des Geräteeinbaukanals 14 erstreckende Ausnehmung 27 auf, die eine vereinfachte Wandmontage des Geräteeinbaukanals 14 ermöglicht. An beiden Seiten der Halteschiene 13 sind Rastvorsprünge 28, 28' angeordnet, die mit den Rasthaken 12, 12', 12" des Montageelements 1 kooperieren. Zum Einbau des Montageelements 1 in den Geräteeinbaukanal 14 werden zunächst die starren Rasthakten 12', 12" hinter den Rastvorsprung 28' der Halteschiene 13 angeordnet und die Dose mit der Halteschiene 13 verrastet, indem das Montageelement 1 in Richtung des Kanalbodens 26 gedrückt wird. Dadurch schiebt sich der flexible Rasthaken 12 über seine Einführungsschräge 29 über den anderen Rastvorsprung 28 der Halteschiene 13, bis der flexible Rasthaken 12 über die Halteschiene 13 geschoben ist und das erfindungsgemäße Montageelement 1 mit der Halteschiene 13 des Geräteeinbaukanals 14 verrastet. Damit liegen die starren Rasthaken 12', 12" auf einer Längsseite der Halteschiene 13 an, während der flexible Rasthaken 12 an der anderen Längsseite der Halteschiene 13 anliegt. In alternativen Ausführungsformen können an einer Längsseite der Halteschiene 13 flexible und starre Rasthaken 12, 12', 12" anliegen, während an der anderen Längsseite der Halteschiene 13 lediglich flexible Rasthaken 12 anliegen. Auf diese Weise ist die Verschiebbarkeit des erfindungsgemäßen Montageelements 1 entlang der Halteschiene 13 des Geräteeinbaukanals 14 erleichtert.

Zur Aufbewahrung des Arretierungselements 3 ist dieses in der Führung 6 geführt und das Rastelement 21 des Arretierungselements 3 ist mit dem Durchgangsloch 23 in der Wandung 5 eingerastet. In diesem Zustand liegt der Stützabschnitt 18 des Arretierungselements 3 nicht an der der Hutschiene 13 abgewandten Seite des Rasthakens 12 an, so dass das Montageelement 1 sich zwar nicht selbständig von der Halteschiene 13 löst, jedoch durch Verschieben entlang der Halteschiene 13 exakt positioniert werden kann.

Nachdem das erfindungsgemäße Montageelement in seine exakte Position in Längsrichtung des Geräteeinbaukanals 14 gebracht worden ist, wird das Arretierungselement 3 entlang der Führung 6 vollständig in Richtung des Kanalbodens 26 gedrückt. Dadurch gelangt der Stützabschnitt 18 in eine Position, in der er an der Halteschiene 13 abgewandten Seite des flexiblen Rasthakens 12 anliegt und so den flexiblen Rasthaken 12 stärker gegen den Rastvorsprung 28 der Hutschiene 13 presst. Dadurch wird ein weiteres Verschieben des Montageelements 1 entlang der Hutschiene 13 des Geräteeinbaukanals 14 wirksam verhindert. So ist die Position des Montageelements 1 in dem Geräteeinbaukanal 14 arretiert.

Nach einer derartigen Montage des Montageelements 1 in den Geräteinbaukanal 14 können Installationsgeräte wie Steckdosen, Schalter, Empfänger von Fernsteuerungssystemen, Datendosen, Telefondosen und dergleichen in das Montageelement 1 eingesetzt und beispielsweise durch Verschraubung darin befestigt werden.

Vorliegende Erfindung wurde unter Bezugnahme auf die in den Figuren gezeigte Ausführungsform des erfindungsgemäßen Montageelementes im Detail erläutert. Es versteht sich, dass die Erfindung nicht auf die dargestellte Ausführungsform beschränkt ist, sondern durch die folgenden Ansprüche definiert wird.

## Patentansprüche

1. Montageelement (1) für Geräteeinbaukanäle (14) mit einer Halteschiene (13) am Kanalboden (26), das ein Bodenteil (4) mit daran angeformten Rasthaken (12, 12', 12"), welche angepasst sind mit Rastvorsprüngen (28, 28') an beiden Seiten der Halteschiene (13) zu kooperieren, und Wandungen (5, 5', 5",) sowie ein Arretierungselement (3) umfasst, wobei das Arretierungselement (3) zumindest aus einem Führungsabschnitt (16) und einem Stützabschnitt (18) aufgebaut ist, wobei mindestens einer der Rasthaken (12, 12', 12") als flexibler Rasthaken (12) zum Verrasten am Rastvorsprung (28, 28') der einen Seite der Halteschiene (13) ausgebildet ist und der Stützabschnitt (18) im im Geräteeinbaukanal (14) montierten Zustand des Montageelements (1) durch eine Öffnung (9) des Bodenteils (4) geführt ist, wobei die weiteren Rasthaken (12', 12") als starre Rasthaken zum Verrasten am Rastvorsprung (28, 28') der anderen Seite der Halteschiene (13) ausgeführt sind und der Stützabschnitt (18) im im Geräteeinbaukanal (14) montierten Zustand des Montageelements (1) an der der Halteschiene (13) abgewandten Seite eines Rasthakens (12) anliegt, wobei durch den Führungsabschnitt (16) das Arretierungselement (3) durch eine Führung (6) einer der Wandungen (5) geführt ist und der Führungsabschnitt (16) eine Führungswand (20) mit einem Rastelement (21) aufweist, wobei das Rastelement (21) zur Aufbewahrung des Arretierungselements (3), wenn der Stützabschnitt (18) des Arretierungselements (3) nicht an der der Halteschiene (13) abgewandten Seite des Rasthakens (12) anliegt, in einem Durchgangsloch (23) in der Wandung (5) eingerastet ist.

2. Montageelement (1) nach Anspruch 1, wobei in einer der Wandungen (5) die Führung (6) vorgesehen ist, in der der Führungsabschnitt (16) des Arretierungselements (3) im im Geräteeinbaukanal (14) montierten Zustand des Montageelements (1) geführt ist.

3. Geräteeinbaukanal (14) mit einer Halteschiene (13) am Kanalboden (26) und einem Montageelement (1) nach Anspruch 1 oder 2.

4. Verfahren zur Montage eines Montageelements (1) in einen Geräteeinbaukanal (14) mit einer Halteschiene (13) am Kanalboden (26), wobei das Montagelements (1) ein Bodenteil (4) mit daran angeformten, mit der Halteschiene (13) kooperierenden Rasthaken (12, 12', 12") und Wandungen (5, 5', 5") sowie ein Arretierungselement (3) umfasst, wobei das Arretierungselement (3) zumindest aus einem Führungsabschnitt (16) zur Führung in einer Führung (6) einer der Wandungen (5) mit einer Führungswand (20) mit einem Rastelement (21) und einem Stützabschnitt (18) aufgebaut ist, wobei mindestens einer der Rasthaken (12, 12', 12") als flexibler Rasthaken (12) ausgebildet ist und der Stützabschnitt (18) im im Geräteeinbaukanal (14) montierten Zustand des Montagelements (1) durch eine Öffnung (9) des Bodenteils (4) geführt ist, wobei die weiteren Rasthaken (12', 12") als starre Rasthaken ausgeführt sind und der Stützabschnitt (18) im im Geräteeinbaukanal (14) montierten Zustand des Montageelements (1) an der Halteschiene (13) abgewandten Seite eines flexiblen Rasthakens (12) anliegt, wobei das Verfahren die folgenden Stufen umfasst:
(i) Aufrasten des Montageelements (1) auf die Halteschiene (13), wobei das Rastelement (21) des Arretierungselements (3) in ein Durchgangsloch (23) in der Wandung (5) eingerastet ist;
(ii) Positionieren des Montageelements (1) in Längsrichtung des Geräteeinbaukanal (14) durch Verschieben des Montageelements (1) entlang der Halteschiene (13); und
(iii) Arretieren der Position des Montageelements (1), indem das Rastelement (21) des Arretierungselements (3) aus dem Durchgangsloch (23) der Wandung (5) ausgerastet wird und der Stützabschnitt (18) des Arretierungselements (3) des Montageelements (1) durch eine Öffnung (9) des Bodenteils (4) geführt wird, so dass der Stützabschnitt (18) an der der Halteschiene (13) abgewandten Seite eines Rasthakens (12) anliegt.

## Claims

1. Mounting element (1) for device installation channels (14) with a holding rail (13) on the channel base (26), which comprises a bottom portion (4) with latching hooks (12, 12', 12") formed on it, which are configured such as to interact with latching projections (28, 28') on both sides of the holding rail (13), and wall sections (5, 5', 5"), as well as a locking element (3), wherein the locking element (3) is composed of at least one guide portion (16) and one support portion (18), wherein at least one of the latching hooks (12, 12', 12") is configured as a flexible latching hook (12) for latching onto the latching projection (28, 28'), which is formed on one side of the holding rail (13), and the support portion (18), in the mounted state of the mounting element (1), is guided in the installation channel (14) through an opening (9) in the bottom portion (4), wherein the other latching hooks (12', 12") are configured as rigid latching hooks for latching onto the latching projection (28, 28') on the other side of the holding rail (13), and the support portion (18), in the mounted state of the mounting element (1), is in contact in the device installation channel (14) with the side of a latching hook (12) facing away from the holding rail (13), wherein, through the guide portion (16), the locking element (3) is guided through a guide (6) of one of the wall sections (5), and the guide portion (16) comprises a guide wall (20) with a latching element (21), wherein, in order to safeguard the locking element (3) when the support portion (18) of the locking element (3) is not in contact with the side of the latching hook (12) facing away from the holding rail (13), the latching element (21) is latched into a passage hole (23) in the wall section (5).

2. Mounting element (1) according to claim 1, wherein one of the wall sections (5) is provided with the guide (6), in which, in the mounted state of the mounting element (1), the guide portion (16) of the locking element (3) is guided in the device installation channel (14).

3. Device installation channel (14) with a holding rail (13) on the channel base (26) and a mounting element (1) according to claim 1 or 2.

4. Method for mounting a mounting element (1) in a device installation channel (14) with a holding rail (13) on the channel base (26), wherein the mounting element (1) comprises a bottom portion (4) with latching hooks (12, 12', 12") formed on it, interacting with the holding rail (13), and wall sections (5, 5', 5"), as well as a locking element (3), wherein the locking element (3) is formed from at least one guide portion (16) for guiding, in a guide (6), one of the wall sections (5) with a guide wall (20), with a latching element (21) and a support portion (18), wherein at least one of the latching hooks (12, 12', 12") is configured as a flexible latching hook (12), and, in the mounted state of the mounting element (1), the support portion (18) is guided in the device installation channel (14) through an opening (9) of the bottom portion (4), wherein the further latching hooks (12', 12") are configured as rigid latching hooks, and the support portion (18), in the device installation channel (14), in the mounted state of the mounting element (1), rests against the side of a flexible latching hook (12) facing away from the holding rail (13), wherein the method comprises the following steps:
(i) Latching of the mounting element (1) onto the holding rail (13), wherein the latching element (21) of the locking element (3) latches into a passage hole (23) in the wall section (5),
(ii) Positioning of the mounting element (1) in the longitudinal direction of the device installation channel (14) by pushing the mounting element (1) along the holding rail (13); and
(iii) locking the position of the mounting element (1), in that the latching element (21) of the locking element (3) is disengaged out of the passage opening (23) of the wall section (5), and the support portion (18) of the locking element (3) of the mounting element (1) is guided through an opening (9) of the bottom portion (4), such that the support portion (18) rests against the side of a latching hook (12) facing away from the holding rail (13).

## Revendications

1. Élément de montage (1) pour canaux d'intégration d'appareils (14) avec un rail de maintien (13) à la base (26) du canal, comprenant un fond (4) sur lequel sont moulés des crochets d'enclenchement (12, 12',12"), lesquels sont ajustés pour coopérer avec des saillies d'enclenchement (28, 28') sur les deux côtés du rail de maintien (13) et comprenant des parois latérales (5, 5', 5"), ainsi qu'un élément d'arrêt (3) ; l'élément d'arrêt (3) étant construit avec au moins un tronçon de guidage (16) et avec au moins un tronçon d'appui (18) ; au moins l'un des crochets d'enclenchement (12, 12', 12") étant configuré en tant que crochet d'enclenchement (12) flexible pour s'enclencher sur la saillie d'enclenchement (28, 28") sur un côté du rail de maintien (13) ; et le tronçon d'appui (18) passant, quand l'élément de montage (1) est en position montée dans le canal d'intégration d'appareils (14), à travers une ouverture (9) du fond (4) ; les autres crochets d'enclenchement (12', 12") étant configurés en tant que crochets d'enclenchement rigides pour s'enclencher sur la saillie d'enclenchement (28, 28') de l'autre côté du rail de maintien (13) ; et le tronçon d'appui (18) étant, quand l'élément de montage (1) est en position montée dans le canal d'intégration d'appareils (14), en appui sur le côté d'un crochet d'enclenchement (12), côté opposé au rail de maintien (13) ; l'élément d'arrêt (3) étant guidé par le tronçon de guidage (16) à travers un guidage (6) de l'une des parois latérales (5) ; et le tronçon de guidage (16) présentant une paroi de guidage (20) avec un élément d'enclenchement (21); l'élément d'engagement (21) étant enclenché dans un trou de passage (23) dans la paroi latérale (5) afin de conserver l'élément d'arrêt (3) lorsque le tronçon d'appui (18) de l'élément d'arrêt (3) n'est pas en appui sur le côté du crochet d'enclenchement (12), côté opposé au rail de guidage (13).

2. Élément de montage (1) selon la revendication 1, le guidage (6) étant prévu dans l'une des parois latérales (5), dans lequel passe le tronçon de guidage (16) de l'élément d'arrêt (3) quand l'élément de montage (1) est en position montée dans le canal d'intégration d'appareils (14).

3. Canal d'intégration d'appareils (14) comportant un rail de maintien (13) à la base (26) du canal et un élément de montage (1) selon la revendication 1 ou 2.

4. Procédé de montage d'un élément de montage (1) dans un canal d'intégration d'appareils (14) avec un rail de maintien (13) à la base (26) du canal ; l'élément de montage (1) comprenant un fond (4) sur lequel sont moulés des crochets d'enclenchement (12, 12', 12") coopérant avec le rail de maintien (13), et comprenant des parois latérales (5, 5', 5") ainsi qu'un élément d'arrêt (3) ; l'élément d'arrêt (3) étant construit avec au moins un tronçon de guidage (16), lequel est destiné à guider dans un guidage (6) d'une des parois latérales (5) munie d'une paroi de guidage (20) avec un élément d'enclenchement (21), et avec au moins un tronçon d'appui (18) ; l'un au moins des crochets d'enclenchement (12, 12', 12") étant conformé en tant que crochet d'enclenchement (12) flexible ; et le tronçon d'appui (18) passant, quand l'élément de montage (1) est en position montée dans le canal d'intégration d'appareils (14), à travers une ouverture (9) du fond (4) ; les autres crochets d'enclenchement (12', 12") étant configurés en tant que crochets d'enclenchement rigides ; et le tronçon d'appui (18) étant, quand l'élément de montage (1) est en position montée dans le canal d'intégration d'appareils (14), en appui sur le côté d'un crochet d'enclenchement (12) flexible, côté opposé au rail de maintien (13) ; le procédé comprenant les étapes suivantes :
(i) Enclenchement de l'élément de montage (1) sur le rail de maintien (13), l'élément d'enclenchement (21) de l'élément d'arrêt (3) étant enclenché dans un trou de passage (23) dans la paroi latérale (5).
(ii) Positionnement de l'élément de montage (1) dans le sens longitudinal du canal d'intégration d'appareils (14) en faisant coulisser l'élément de montage (1) le long du rail de maintien (13) et
(iii) Fixation de la position de l'élément de montage (1) en faisant sortir l'élément d'enclenchement (21) de l'élément d'arrêt (3) hors du trou de passage (23) de la paroi latérale (5) et en guidant le tronçon d'appui (18) de l'élément d'arrêt (3) de l'élément de montage (1) à travers une ouverture (9) dans le fond (4), de telle sorte que le tronçon de guidage (18) est en appui sur le côté d'un crochet d'enclenchement (12), côté opposé au rail de maintien (13).
